# EUROPEAN PATENT APPLICATION

(11) **EP 2 913 307 A1**
(43) Date of publication of application: **02.09.2015**
(21) Application number: 12886910.4
(22) Date of filing: 07.11.2012
(51) Int. Cl.: C02F 1/78, B63B 13/00, C02F 7/00, B01F 3/04

(54) **SHIP BALLAST WATER TREATMENT SYSTEM**

(30) Priority: 23.10.2012 KR 20120117862
(71) Applicant: Sunbo Industries Co., Ltd., Busan 604-826 (KR); Dsec Co., Ltd., Busan 600-816 (KR)
(72) Inventor: CHOI, Kum Sik, Busan 604-783 (KR); LEE, Young Man, Yongin-si Gyeonggi-do 448-534 (KR)
(74) Representative: Cabinet Chaillot
(86) International application number: PCT/KR2012/009341
(87) International publication number: WO 2014/065458

(57) **Abstract**

A ship ballast water treatment system is disclosed. The ship ballast water treatment system according to the present invention comprises: an ozone bubble unit provided inside a conduit through which ballast water flows, for turning supplied ozone into bubbles; a flow channel for sea water supply, which is a separate line not diverging from the conduit, and a side part of which is connected to the ozone bubble unit so as to supply sea water to the ozone bubble unit; and a sea water pumping unit provided in the flow channel for sea water supply, for pumping sea water into the ozone bubble unit.

## Description

### [Technical Field]

The present invention relates to a ship ballast water treatment system, and more particularly, to a ship ballast water treatment system, which can sterilize ballast water stored in a plurality of ballast tanks disposed in a ship and receiving seawater to improve stability of the ship.

### [Background Art]

Generally, ships such as LNG carriers, LPG carriers, container ships, bulk carriers, and tankers are designed to transport cargo in navigation. Thus, when cargo is unloaded from a ship, the center of gravity of the ship can be shifted upwards, causing instability of the ship.

In other words, when the draft (that is, the depth to which a ship is immersed when bearing a given load) becomes shallow by unloading cargo from the ship, the degree of hogging (referring to upward bending of a ship as the center of the ship is raised while the bow and the stem are lowered due to heavier weights thereof by intensively loading cargo at the bow and the stern of the ship) increases during navigation, and shearing force and longitudinal bending moment applied to the ship also increase.

In addition, during navigation, the ship can be exposed to impact of waves striking the bottom of the ship, that is, a slamming phenomenon, and also suffers from a propeller racing phenomenon in which the propeller is not fully submerged in water and emerges from a water surface, causing decrease in propulsion performance or increase in load fluctuation on the propeller and main engines, and a problem of deterioration in maneuverability due to insufficient submersion of a rudder in the water.

Accordingly, in order to resolve such problems, ships such as LNG carriers, LPG carriers, container ships, bulk carriers, and tankers are provided with a plurality of ballast tanks storing seawater in order to improve stability of the ships. Herein, the water stored in the ballast tank is referred to as ballast water.

Ballast water serves to provide stable adjustment of draft and trim (defined as a longitudinal inclination of a ship) depending upon the amount of cargo loaded on the ship. As described above, if ballast water is not supplied into the ship after cargo is completely unloaded from the ship, it is difficult for the ship to maintain a sufficient draft only with an inherent weight thereof.

As a result, the bow of the ship can severely emerge from the water surface, or the propeller of the ship can be insufficiently submerged in the seawater, thereby causing bow slamming, deterioration of propulsion performance, or deterioration in maneuverability. Therefore, it is necessary for ships to use the ballast water.

However, use of ballast water provides a problem. That is, marine contamination can occur due to microorganisms or marine organisms in the course of supplying or discharging the ballast water into or from the ballast tanks.

That is, when ballast water supplied into a ship in one nation is discharged therefrom in another nation having a completely different environment, various foreign substances, microorganisms, viruses, and other organic materials of the one nation can disturb the marine ecosystem of the other nation.

In consideration of such danger, strengthened international regulations on ballast water and sediments, enforced starting in 2009, require that ballast water be discharged only after sterilization of 99% microorganisms in the ballast water in order to prevent propagation of toxic microorganisms included in the ballast water. As such, the strengthened international regulations on ballast water and sediments increase difficulty in treatment of ballast water and promote development of various techniques related to a ballast water treatment apparatus.

Among conventional techniques, in a conventional filtration type ballast water treatment apparatus, underwater creatures such as plankton are deposited. In order to remove the deposited underwater creatures, the apparatus must be disassembled before cleaning, thereby providing a complicated cleaning process and difficulty in removal of toxic viruses other than some plankton.

Further, in a ballast water treatment apparatus wherein sodium hypochlorite generated through electrolysis of seawater is added to ballast water for sterilization of the ballast water, only some microorganisms can be removed through an indirect method, thereby providing low sterilization efficiency and difficulty in control of a sterilization material.

Further, a ballast water treatment apparatus separately employing a filtration device and an electrolysis device performs sterilization of ballast water through many processes, thereby requiring a very complicated operation mechanism and a large space.

Moreover, this apparatus can sterilize some microorganisms through an indirect method, thereby providing low sterilization efficiency and difficulty in control of a sterilization material.

### [Disclosure]

### [Technical Problem]

It is an aspect of the present invention to provide a ship ballast water treatment system, which is a direct injection type system allowing direct supply of ozone into a ballast conduit and can achieve efficient dissolution of ozone in ballast water through generation of ozone bubbles.

### [Technical Solution]

In accordance with one aspect of the present invention, a ship ballast water treatment system includes: an ozone bubbling unit disposed inside a conduit through which ballast water flows and converting ozone supplied thereto into bubbles; a seawater supply channel provided as a separate line not diverging from the conduit and connected at one end thereof to the ozone bubbling unit, and supplying seawater to the ozone bubbling unit therethrough; and a seawater pumping unit provided to the seawater supply channel and pumping the seawater into the ozone bubbling unit.

The ozone bubbling unit may include a bubble nozzle connected to the one end of the seawater supply channel and converting the supplied ozone into ozone microbubbles using the seawater; and a spreading unit provided to an outlet of the bubble nozzle and spreading the ozone microbubbles.

The conduit may include a main conduit and a connecting conduit detachably connected between pieces of the main conduit, and the ozone bubbling unit may be disposed in the connecting conduit.

Both ends of the connecting conduit may have the same diameter as that of the main conduit, and a central portion of the connecting conduit may have a larger diameter than that of both ends thereof to allow the ozone bubbles to be spread therethrough.

The ozone bubbling unit may be placed at the central portion of the connecting conduit.

The seawater pumping unit may include a pump disposed in the seawater supply channel; and a motor provided to the pump and operating the pump.

The ozone may be supplied from an ozone generating unit disposed on a deck, and the ozone generating unit may include an oxygen generator disposed on the deck; an oxygen storage tank disposed on the deck and storing oxygen generated by the oxygen generator; and an ozone generator disposed on the deck and generating ozone using oxygen supplied from the oxygen storage tank.

The oxygen generator, the oxygen storage tank and the ozone generator may be disposed inside a container placed on the deck.

The ozone generated by the ozone generator may be supplied into the ozone bubbling unit through a double-pipe.

In accordance with another aspect of the present invention, a ship ballast water treatment system includes: an ozone bubbling unit to which part of a conduit through which ballast water flows is detachably coupled, and converting ozone supplied into the part of the conduit into microbubbles using seawater, wherein the seawater is supplied through a separate line not diverging from the conduit.

### [Advantageous Effects]

Embodiments of the preset invention can achieve efficient sterilization of ballast water by directly supplying ozone bubbles into a conduit through which the ballast water flows, while producing the ozone bubbles by supplying seawater through a separate line instead of the conduit such that a constant amount of ozone can be produced at a constant rate.

### [Description of Drawings]

Fig. 1 is a schematic diagram of a ship ballast water treatment system according to one embodiment of the present invention.
Fig. 2 is a plan view of the ship ballast water treatment system of Fig. 1, in which an ozone generating unit is disposed on a deck.
Fig. 3 is a schematic diagram of main components of the ship ballast water treatment system of Fig. 1.
Fig. 4 schematically shows an installation location of the ozone generating unit and a double-pipe in the ship ballast water treatment system of Fig. 1.
Fig. 5 schematically shows the ship ballast water treatment system according to the embodiment of the present invention in use.

### [Best Mode]

The above and other aspects, features, and advantages of the present invention will become apparent from the detailed description of the following embodiments in conjunction with the accompanying drawings.

Hereinafter, exemplary embodiments of the present invention will be described in detail with reference to the accompanying drawings. Like components will be denoted by like reference numerals throughout the drawings.

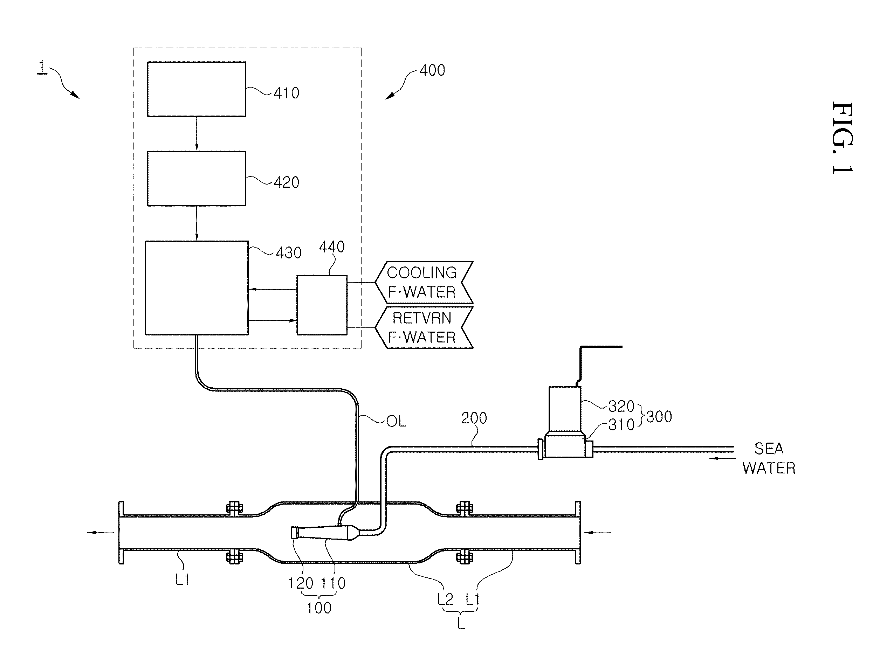

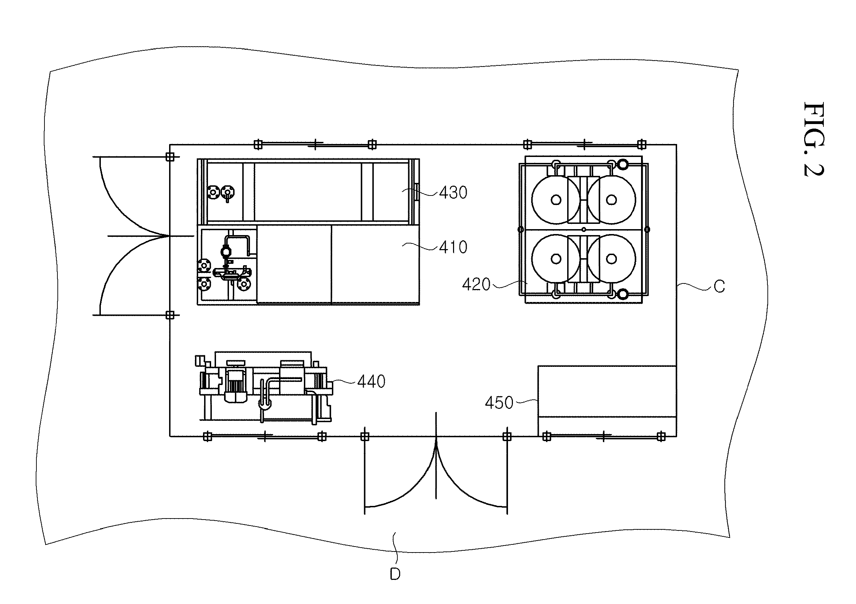

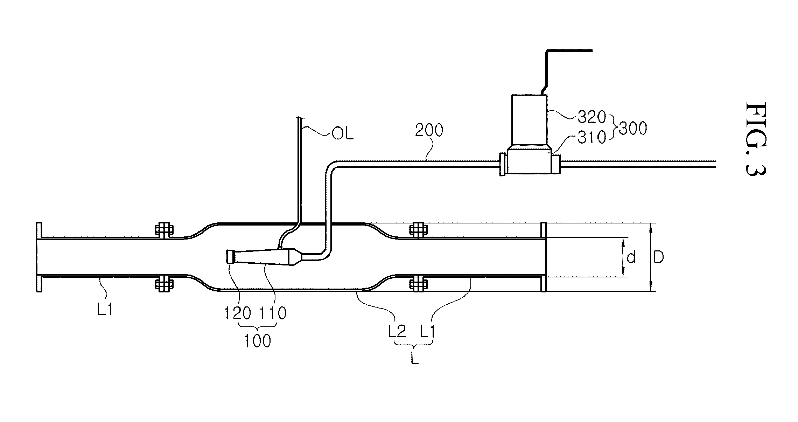

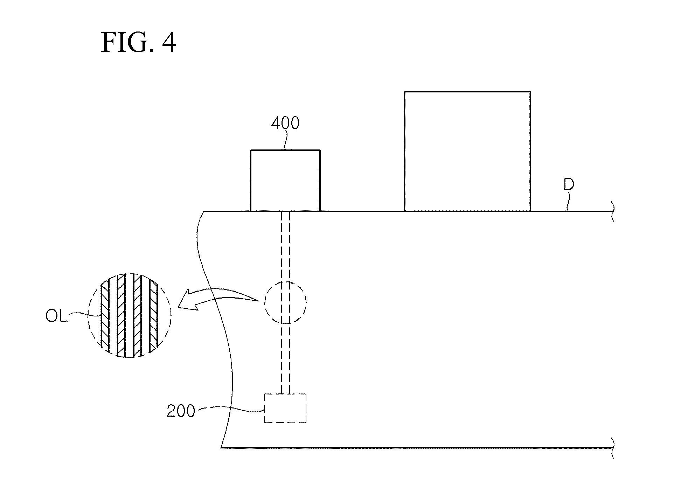

Fig. 1 is a schematic diagram of a ship ballast water treatment system according to one embodiment of the present invention; Fig. 2 is a plan view of the ship ballast water treatment system of Fig. 1, in which an ozone generating unit is disposed on a deck; Fig. 3 is a schematic diagram of main components of the ship ballast water treatment system of Fig. 1; and Fig. 4 schematically shows an installation location of the ozone generating unit and a double-pipe in the ship ballast water treatment system of Fig. 1.

Referring to these drawings, a ship ballast water treatment system 1 according to one embodiment of the invention includes: an ozone bubbling unit 100 disposed inside a conduit L through which ballast water flows and converting ozone supplied thereto into bubbles; a seawater supply channel 200 provided as a separate line not diverging from the conduit L and connected at one end thereof to the ozone bubbling unit 100, and supplying seawater to the ozone bubbling unit 100 therethrough; a seawater pumping unit 300 provided to the seawater supply channel 200 and pumping the seawater into the ozone bubbling unit 100; and an ozone generating unit 400 disposed on a deck D of the ship.

As shown in Fig. 1, the ozone bubbling unit 100 is disposed inside the conduit L and converts ozone supplied thereto into ozone microbubbles using seawater while diffusively discharging the ozone microbubbles such that the ozone microbubbles can be dissolved in a wide surface area in the ballast water.

In this embodiment, as shown in Fig. 3, the ozone bubbling unit 100 includes a bubble nozzle 110 connected to the one end of the seawater supply channel 200 and converting the supplied ozone into ozone microbubbles using seawater; and a spreading unit 120 provided to an outlet of the bubble nozzle 110 and spreading the ozone microbubbles.

As shown in Fig. 3, an ozone supply channel OL is detachably coupled to the bubble nozzle 110 of the ozone bubbling unit 100, and ozone generated from an ozone generating unit (see Fig. 2) flows into the bubble nozzle 110 through the ozone supply channel OL.

In this embodiment, the bubble nozzle 110 is provided therein with an ozone flow passage (not shown) communicating with the ozone supply channel OL, and a seawater flow passage (not shown) communicating with the seawater supply channel 200.

In addition, a bottleneck portion having a narrower diameter than other portions of the seawater flow passage is formed in region of the seawater flow passage, at which the ozone flow passage meets the seawater flow passage. In the bottleneck portion, a negative pressure is generated and forces the supplied ozone to be suctioned from the ozone flow passage into the seawater flow passage such that the supplied ozone is converted into the ozone microbubbles and discharged together with the seawater through the outlet of the bubble nozzle.

Furthermore, the outlet of the bubble nozzle 110 may be provided with a bubble layer (not shown) having a plurality of fine holes, whereby generation of the ozone microbubbles can be promoted while the supplied ozone passes through the bubble layer.

As shown in Fig. 3, the spreading unit 120 of the ozone bubbling unit 100 is provided to the outlet of the bubble nozzle 110, and an internal flow passage of a portion of the spreading unit connected to the seawater flow passage has the same diameter as that of the seawater flow passage and an internal flow passage in other regions of the spreading unit distant from the outlet of the bubble nozzle 110 has a larger diameter than the seawater flow passage, whereby the ozone microbubbles can be spread therethrough.

In this embodiment, the ozone bubbling unit 100 is illustrated as one example and may be replaced by any bubble nozzle known in the art. In addition, the ozone bubbling unit 100 may be composed only of the bubble nozzle 110 without the spreading unit 120.

As shown in Fig. 3, in this embodiment, the conduit L through which ballast water flows includes a main conduit L1 and a connecting conduit L2 detachably connected between pieces of the main conduit L1, and the ozone bubbling unit 100 may be disposed at a central portion of the connecting conduit L2.

In addition, as shown in Fig. 3, both ends of the connecting conduit L2 may have the same diameter as that of the main conduit L1, and the central portion of the connection conduit L2 may have a larger diameter D than the diameter d of both ends thereof. With this structure, the flow rate of the ballast water in the connecting conduit L2 is decreased at the central portion thereof, thereby providing an advantage of promoting spreading of the ozone microbubbles.

Further, a flange may be disposed at an interface between the main conduit L1 and the connecting conduit L2 such that the main conduit L1 and the connecting conduit L2 can be coupled to each other by bolts and nuts through the flange.

Furthermore, for convenience of installation and coupling of the ozone bubbling unit 100, the seawater supply channel 200, the seawater pumping unit 300, and the ozone supply channel OL, a portion of an upper side of the connecting conduit may be cut and detachably coupled thereto by bolts and nuts.

As shown in Figs. 1 and 3, the seawater supply channel 200 is connected at one end thereof to the bubble nozzle 110 to supply seawater to the bubble nozzle 110 and is provided as a separate line not diverging from the conduit L.

As a result, a constant amount of seawater can be supplied at a constant rate into bubble nozzle 110 without being influenced by the amount or flow rate of the ballast water flowing in the conduit L, thereby guaranteeing generation of the ozone microbubbles at a constant rate.

Specifically, when the ballast water within the conduit L or a line diverging from the conduit L is used to generate the microbubbles, the generating amount or speed of the ozone microbubbles depends on the ballast water within the conduit L.

Accordingly, in the case that the conduit L is insufficiently filled with the ballast water, since there is a limit in the amount of ballast water introduced into the bubble nozzle 110, generation of desired ozone microbubbles cannot be guaranteed, or only a small amount of the ozone microbubbles can be generated.

In this embodiment, however, seawater can be stably and accurately supplied through the seawater supply channel 200, which is a separate line independent of the conduit L, thereby allowing constant generation of the ozone microbubbles.

In addition, the seawater supply channel 200 is connected at the other side thereof to a sea chest (not shown) or a sea.

The seawater pumping unit 300 serves to supply the seawater at a high rate to the bubble nozzle 110, and includes a pump 310 provided to the seawater supply channel 200 and a motor 320 disposed at an upper side of the pump 310 to operate the pump 310, as shown in Figs. 1 and 3.

As shown in Fig. 2, the ozone generating unit 400 is disposed on the deck D and generates ozone to supply ozone bubbles. The structure in which the ozone generating unit 400 is disposed on the deck D can solve a problem of complicated operation caused by a narrow installation space in the case that such an ozone generating unit is disposed within a ship as in the related art, and allows toxic gas to be diluted in air on the deck D instead of the interior of the ship in case of emergency, thereby providing safety.

In this embodiment, the ozone generating unit 400 may be disposed inside a container C, as shown in Fig. 2. This structure allows easy work and provides convenience in installation and movement of the ozone generating unit.

As shown in Fig. 2, the ozone generating unit 400 includes an oxygen generator 410 disposed on the deck D and generating oxygen using air supplied thereto, an oxygen storage tank 420 disposed on the deck D and storing oxygen generated by the oxygen generator 410, an ozone generator 430 disposed on the deck D and generating ozone using oxygen supplied from the oxygen storage tank 420, a water chiller 440 configured to remove heat generated in the course of generating ozone, and a control panel 450 that controls these components 410∼440.

The ozone generator 430 may generate ozone in a silent discharge manner wherein, with a dielectric material such as glass or a ceramic material interposed between electrodes, oxygen is supplied into a discharge space and a high voltage of 6 kV ∼ 15 kV is applied to the electrodes to induce reaction for generating ozone in the discharge space.

The ozone gas generated by the ozone generator 430 may be supplied at a flow rate of 1 L/min into the conduit L, through which ballast water flows, such that the conduit L has an ozone concentration of 170g/cm³ and an ozone injection amount of 2 mg/L.

In this embodiment, in order to remove heat generated in the course of generating ozone, the ozone generator 430 may cool the ozone generator 430 using the water chiller 440, as shown in Fig. 1. The water chiller 440 may perform a cooling function using cold fresh water, and the fresh water having high temperature resulting from heat exchange may be cooled again through a cooler.

Further, ozone generated by the ozone generator 430 is supplied to the ozone bubbling unit 100 disposed at the bottom of the ship through the ozone supply channel OL, which passes through a closed space. An ozone transport pipe is likely to suffer from corrosion due to characteristics of ozone. Thus, in this embodiment, in order to prevent leakage of ozone using an ozone transport pipe for redundancy, even upon corrosion of one transport pipe, the ozone supply channel OL, through which ozone is transported, may be realized by a double-pipe, as shown in Fig. 4.

Further, the ozone supply channel OL may be provided with at least one valve (not shown), which may be opened or closed by a controller (not shown). Furthermore, the conduit L may be provided therein with at least one bubble sensor (not shown) capable of measuring the amount of bubbles generated, and the controller may regulate the degree of opening of the at least one valve provided to the ozone supply channel OL and power of the pump 310 based on the amount of the generated bubbles measured by the bubble sensor.

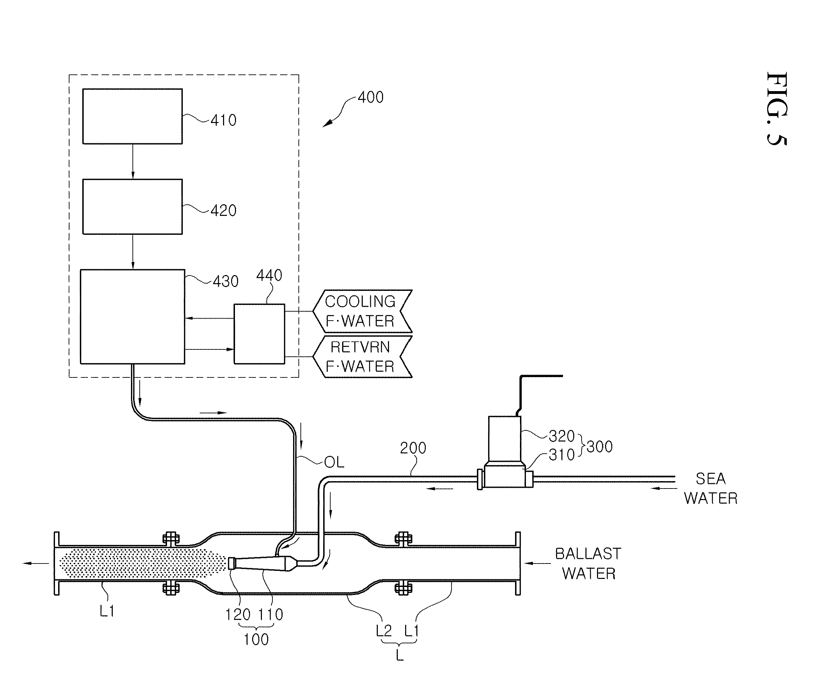

Fig. 5 schematically shows the ship ballast water treatment system according to the embodiment of the present invention in use. Next, operation of the ship ballast water treatment system according to this embodiment will be described with reference to Fig. 5.

Ozone generated in the ozone generating unit 400 is supplied to the ozone bubbling unit 100 through the ozone supply channel OL. The ozone bubbling unit 100 converts the supplied ozone into ozone microbubbles using seawater supplied through the seawater supply channel 200.

In addition, the ozone bubbling unit 100 spreads the ozone microbubbles such that the ozone microbubbles can be dissolved in a wide surface area in ballast water. It can be seen that the ozone microbubbles can be more efficiently spread due to decrease in inflow rate of ballast water resulting from a larger diameter of the central portion of the connecting conduit L2 than that of the main conduit L1.

Further, in this embodiment, generation of the ozone microbubbles in the ozone bubbling unit 100 is carried out using the seawater supplied through the seawater supply channel 200 instead of ballast water flowing through the conduit L, and is thus not affected by the amount or flow rate of the ballast water in the conduit L, thereby providing an advantage of generating a constant amount of the ozone microbubbles at a constant rate.

As such, in this embodiment, ozone is converted into bubbles, which in turn are directly supplied into the conduit through which ballast water flows, thereby enabling efficient sterilization of the ballast water, and seawater is supplied to generate ozone bubbles through a separate line instead of the conduit, thereby providing an advantage of generating a constant amount of the ozone bubbles at a constant rate.

Although some embodiments have been described with reference to the drawings, it will be apparent to those skilled in the art that the present invention is not limited to these embodiments, and that various modifications, changes, and alterations can be made without departing from the spirit and scope of the invention. Therefore, the scope of the present invention should be limited only by the accompanying claims.

## Claims

1. A ship ballast water treatment system, comprising:
an ozone bubbling unit disposed inside a conduit through which ballast water flows and converting ozone supplied thereto into bubbles;
a seawater supply channel provided as a separate line not diverging from the conduit and connected at one end thereof to the ozone bubbling unit, and supplying seawater to the ozone bubbling unit therethrough; and
a seawater pumping unit provided to the seawater supply channel and pumping the seawater into the ozone bubbling unit.

2. The ship ballast water treatment system according to claim 1, wherein the ozone bubbling unit comprises:
a bubble nozzle connected to the one end of the seawater supply channel and converting the supplied ozone into ozone microbubbles using the seawater; and
a spreading unit provided to an outlet of the bubble nozzle and spreading the ozone microbubbles.

3. The ship ballast water treatment system according to claim 1, wherein the conduit comprises a main conduit and a connecting conduit detachably connected between pieces of the main conduit, and the ozone bubbling unit is disposed in the connecting conduit.

4. The ship ballast water treatment system according to claim 3, wherein both ends of the connecting conduit have the same diameter as that of the main conduit, and a central portion of the connecting conduit has a larger diameter than that of both ends thereof to allow the ozone bubbles to be spread therethrough.

5. The ship ballast water treatment system according to claim 4, wherein the ozone bubbling unit is placed at the central portion of the connecting conduit.

6. The ship ballast water treatment system according to claim 1, wherein the seawater pumping unit comprises a pump disposed in the seawater supply channel; and a motor provided to the pump and operating the pump.

7. The ship ballast water treatment system according to claim 1, wherein
the ozone is supplied from an ozone generating unit disposed on a deck; and
the ozone generating unit comprises:
an oxygen generator disposed on the deck;
an oxygen storage tank disposed on the deck and storing oxygen generated by the oxygen generator; and
an ozone generator disposed on the deck and generating ozone using oxygen supplied from the oxygen storage tank.

8. The ship ballast water treatment system according to claim 7, wherein the oxygen generator, the oxygen storage tank and the ozone generator are disposed inside a container placed on the deck.

9. The ship ballast water treatment system according to claim 7, wherein the ozone generated by the ozone generator is supplied into the ozone bubbling unit through a double-pipe.

10. A ship ballast water treatment system comprising:
an ozone bubbling unit to which part of a conduit through which ballast water flows is detachably coupled, the ozone bubbling unit converting ozone supplied into the part of the conduit into microbubbles using seawater,
wherein the seawater is supplied through a separate line not diverging from the conduit.
